# DEMANDE DE BREVET EUROPEEN

(11) **EP 1 852 338 A1**
(43) Date de publication de la demande: **07.11.2007**
(21) Numéro de dépôt: 07107338.1
(22) Date de dépôt: 02.05.2007
(51) Int. Cl.: B62D 33/04, B60P 3/32

(54) **Camping-car dont l'habitacle de conduite comporte un profilé**

(30) Priorité: 04.05.2006 FR 0603974
(71) Demandeur: Itineo, 53100 Mayenne (FR)
(72) Inventeur: Rousseau, Pierre, 53100 Mayenne (FR)
(74) Mandataire: Callon de Lamarck, Jean-Robert

(57) **Abrégé**

L'invention concerne un camping-car comportant une façade frontale (30), des façades latérales (7, 8), un toit (22) et une façade arrière (21), caractérisé en ce qu'il comporte au moins un profilé (4) fixé aux façades latérales (7, 8) et sur lequel viennent se fixer la façade frontale (30) et/ou le toit (22) et/ou la façade arrière (21).

## Description

DOMAINE TECHNIQUE GENERAL La présente invention concerne un camping-car comportant une façade frontale, des façades latérales, un toit et une façade arrière.

### ETAT DE L'ART

Un camping-car est un véhicule automobile comportant principalement un habitacle de conduite et une cabine de loisir de grand volume intérieur . L'habitacle de conduite est une partie du véhicule où peuvent prendre place le conducteur et les passagers, et où sont regroupés tous les instruments nécessaires à la conduite du véhicule. La cabine de loisir peut loger généralement plusieurs passagers, des commodités, des meubles et des appareils ménagers de tous genres par exemple. Dans un camping-car, l'habitacle de conduite et la cabine de loisir communiquent généralement entre eux.

On précise ici que dans la présente description les expressions du type « frontal », « avant », « arrière », « latéral », « droite », « gauche » « supérieur », « inférieur », « vertical », et « horizontal » s'entendent par rapport à une utilisation normale du camping-car. Par exemple, la partie frontale du camping-car correspond ainsi à l'habitacle de conduite du camping-car, la partie arrière correspond à la partie opposée à la partie frontale dans un sens longitudinal au camping-car, et les parties latérales du camping-car correspondent aux parties encadrant, selon une direction d'extension sensiblement verticale, les parties frontales et les parties arrières, les parties supérieures et inférieures encadrant les parties frontales et arrières selon une direction d'extension sensiblement horizontale.

Il existe deux types principaux de camping-cars.

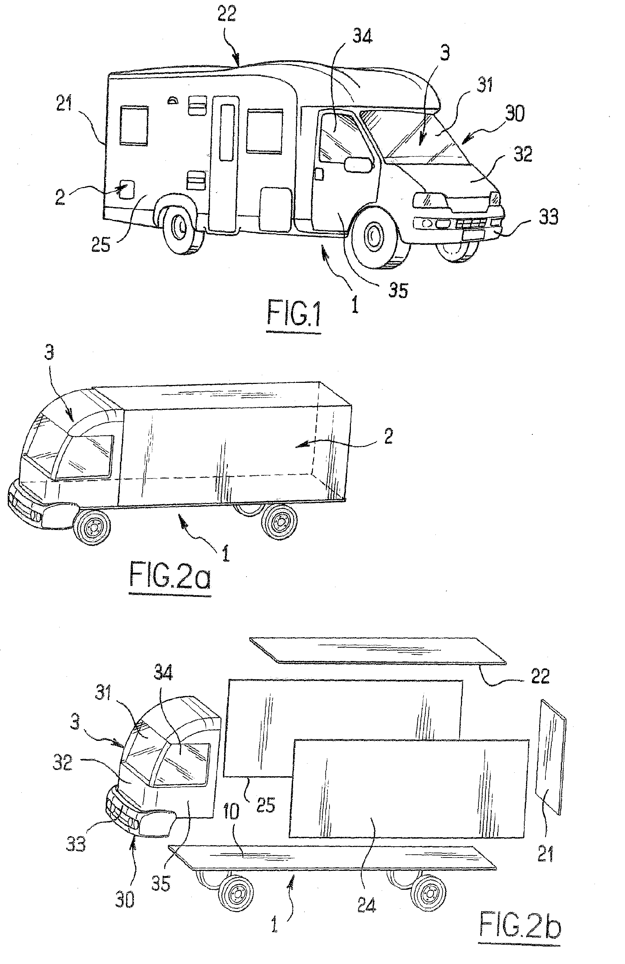

Un premier type est représenté schématiquement à la figure 1. Il est constitué d'un châssis 1 comportant un habitacle de conduite 3. Un plancher est fixé sur le châssis et une cabine de loisir 2 comportant un toit 22, des façades latérales 24 et 25 et une façade arrière 21 est fixée sur le plancher à l'arrière de l'habitacle 3. L'habitacle 3 de conduite comporte une façade frontale et deux façades latérales. Dans un camping-car selon le premier type, l'habitacle de conduite 3 est celui d'un véhicule de type utilitaire classique. En d'autres termes, la façade frontale et les façades latérales de l'habitacle 3 sont fixées sur une carcasse classique de véhicule de type utilitaire.

Du fait de l'emprunt de l'habitacle 3 de conduite à un véhicule utilitaire classique, le constructeur d'un camping-car selon le premier type dispose d'une liberté moins importante dans la conception du camping-car.

Un second type est représenté schématiquement aux figures 2a et 2b. Pour augmenter la liberté de conception par rapport au camping-car de la figure 1, le camping-car est dit « intégral », c'est à dire que l'habitacle de conduite 3 n'est pas emprunté à un véhicule utilitaire classique. A cet effet, le camping-car intégral est constitué d'un châssis 1 sur lequel est fixé un plancher 10. Une cabine de loisir 2 sur le plancher 10 est formée de quatre panneaux 21, 22, 24 et 25 formant respectivement une façade arrière, un toit, une façade latérale gauche et une façade latérale droite. Généralement, les panneaux 24 et 25 sont constitués de panneaux sandwichs, c'est à dire des panneaux composés de deux couches avec un isolant entre elles. L'habitacle de conduite 3, également sur le plancher 10, est formé à l'aide d'une façade avant monolithique 30, généralement en matière plastique dure moulée en forme. L'habitacle 3 de conduite comporte des façades latérales et une façade frontale, comportant par exemple un pare brise 31, un capot moteur 32, un bouclier avant 33, des portières 35 et des fenêtres 34, et divers autres accessoires. La façade 30 joint les panneaux 22, 24 et 25 de sorte que la zone avant du camping-car est fermée.

Du fait que la façade 30 doit joindre les panneaux 22, 24 et 25 de sorte que la zone avant du camping-car soit fermée, la façade 30 est de grande dimension. Elle est par conséquent de conception longue, onéreuse et délicate, ce qui ne favorise pas une évolution rapide d'aménagement et de types de carrosserie du camping-car, comme un restylage par exemple. Elle est de plus onéreuse à produire - du fait de la nécessité de la fabrication d'un moule approprié - et à transporter - du fait de sa taille, de sa fragilité et de son poids.

La cabine 2 des deux types de camping-car présente également des inconvénients. Le toit 22 ainsi que la façade arrière 21 comportent en général également au moins une pièce moulée de grande dimension - présentant les mêmes inconvénients que la façade avant déjà décrite - au lieu d'un simple panneau sandwich. De pus, les panneaux sandwichs utilisés pour le toit 22 et la façade arrière 21 sont de grande dimension.

### PRESENTATION DE L'INVENTION

L'invention propose de pallier au moins un de ces inconvénients.

A cet effet, on propose selon l'invention un camping-car comportant une façade frontale, des façades latérales, un toit et une façade arrière, caractérisé en ce qu'il comporte au moins un profilé fixé aux façades latérales et sur lequel viennent se fixer la façade frontale et/ou le toit et/ou la façade arrière.

L'invention est avantageusement complétée par les caractéristiques suivantes, prises seules ou en une quelconque de leur combinaison techniquement possible :
- le camping-car comporte d'une part un habitacle de conduite comportant des façades latérales et une façade frontale, et d'autre part deux profilés, chaque profilé s'étendant de chaque côté latéral de la façade frontale de l'habitacle ;
- il comporte une cabine de loisir placée à l'arrière de l'habitacle de conduite, la cabine de loisir comportant des façades latérales, un toit et une façade arrière ;
- un seul et même panneau forme une façade latérale de l'habitacle et une façade correspondante de la cabine pour matérialiser une façade latérale du camping-car ;
- le camping-car comporte u n plancher, chaque panneau étant fixé au plancher ;
- chaque profilé de l'habitacle s'étend de chaque côté latéral de la façade frontale de l'habitacle jusqu'au plancher ;
- chaque profilé se prolonge longitudinalement à partir de l'habitacle le long de chaque façade latérale de la cabine et sert de fixation du toit de la cabine ;
- chaque profilé se prolonge longitudinalement le long de chaque façade latérale de la cabine jusqu'au plancher et sert de fixation de la façade arrière de la cabine ;
- chaque profilé forme une pièce d'angle entre les façades latérales du camping-car et la façade frontale et/ou le toit et/ou la façade arrière du camping car ;
- chaque profilé comporte d'une part un creux de réception d'au moins une façade et d'autre part au moins une lèvre de fixation d'au moins une autre façade ;
- le camping-car comporte au moins une traverse fixée aux façades latérales et/ou aux profilés et s'étendant selon une direction perpendiculaire à un plan longitudinal vertical du camping-car ; et
- la façade avant comporte un bouclier, un capot moteur, un pare-brise et/ou une plaque supérieure située au-dessus du pare-brise, le bouclier, le capot moteur, le pare-brise et/ou la plaque supérieure étant directement fixés sur le profilé.

L'invention présente de nombreux avantages.

Du fait de la présence d'un profilé permettant la fixation des façades de l'habitacle de conduite et/ou de la cabine de loisir, les façades de grande dimension de l'état de l'art peuvent être supprimées. Le camping-car est par conséquent de conception brève, bon marché et facile, ce qui favorise une évolution rapide d'aménagement et de types de carrosserie du camping-car, comme un restylage par exemple.

Le camping-car est de plus meilleur marché à produire car chaque façade peut comporter des éléments de taille plus réduite.

Enfin, le camping-car est moins lourd, car le profilé peut être fabriqué en matériau léger (en aluminium par exemple) et la construction utilise principalement des pièces non structurelles légères.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, représente schématiquement un premier type de camping-car connu ;
- les figures 2a et 2b, déjà commentées également, représentent schématiquement un deuxième type connu de camping-car ;
- les figures 3a et 3b représentent une vue schématique générale en perspective d'un exemple de camping-car selon l'invention ;
- les figures 4 et 5 représentent schématiquement une vue en éclatée d'un exemple de mode de réalisation d'un camping-car selon l'invention ;
- la figure 6 représente une vue en coupe d'un détail d'une zone des figures 3a et 3b ; et
- les figures 7a et 7b montrent une coupe radiale de deux modes de réalisation d'un camping-car selon l'invention.

Sur l'ensemble des figures, les éléments similaires portent des références numériques identiques.

### DESCRIPTION DETAILLEE

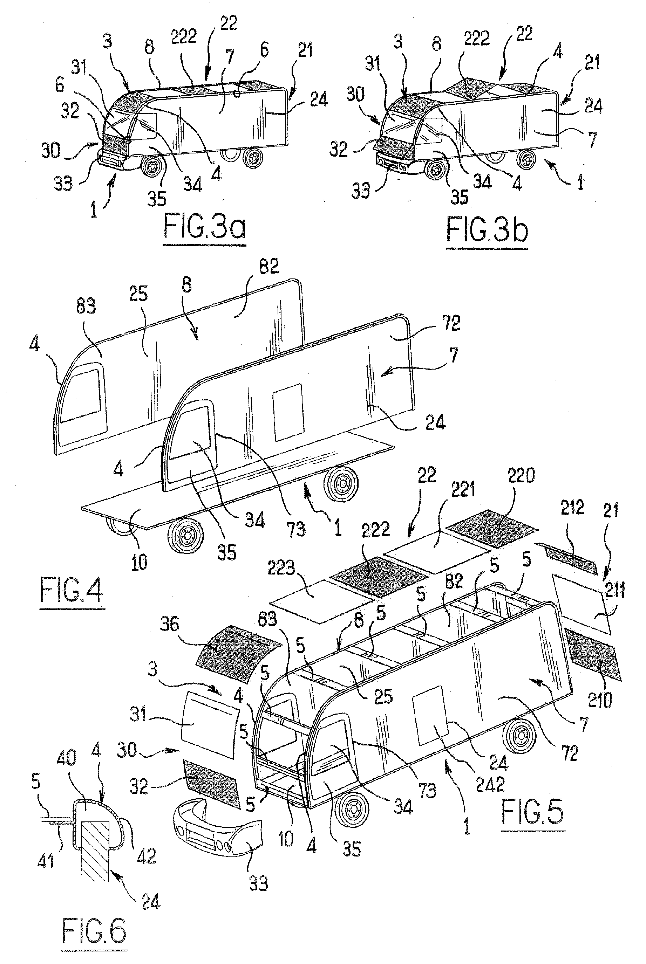

Comme le montrent schématiquement les figures 3a, 3b, 4, 5, 6, 7a et 7b, un exemple d'un camping-car selon l'invention comporte principalement un châssis 1, une façade frontale 30, des façades latérales 7 et 8, un toit 22 et une façade arrière 21.

Le châssis 1 comporte notamment les essieux de roulement, les roues et le moteur.

Comme le montrent l es figure s 4 et 5, le camping-car comporte au moins un profilé 4 fixé aux façades latérales 7, 8 et sur lequel viennent se fixer la façade frontale 30 et/ou le toit 22 et/ou la façade arrière 21. Le profilé 4 a un vrai rôle de fixation structurelle et pas uniquement un caractère esthétique.

Dans la présente description, on appelle « profilé » un produit rigide de section transversale sensiblement constante sur toute sa longueur, la longueur étant grande devant les dimensions de la section transversale. L'extension du profilé peut être rectiligne ou courbe. Conformément à la forme de sa section transversale, le profilé peut être plein, semi-creux ou creux. La section transversale du profilé peut être obtenue par exemple par assemblage, usinage, filage, laminage, profilage, étirage ou préférentiellement par extrusion. Le profilé peut être fabriqué soit exclusivement par l'un de ces procédés, soit par une combinaison de ceux-ci. Il peut être en un seul tronçon ou comporter des tronçons mis bout à bout. Le profilé peut être en tout matériau rigide, comme par exemple une matière plastique ou un métal, comme par exemple de l'aluminium.

Préférentiellement, chaque profilé 4 forme une pièce d'angle entre d'une part les façades latérales 7 et 8 du camping-car et d'autre part la façade frontale 30 et/ou le toit 22 et/ou la façade arrière 21 du camping car.

La figure 6 montre en coupe transversale un détail correspondant aux parties 6 des figures 3a et 3b, autrement dit une section transversale 42 du profilé 4. Elle montre que, préférentiellement, la section 42 du profilé 4 définit d'une part un creux 40 de réception d'au moins une façade, et d'autre part au moins une lèvre 41 de fixation d'au moins une façade. La lèvre 41 est préférentiellement venue de matière sur la section 42 définissant le creux 40. La forme de la section 42 du profilé 4 est donnée à titre d'exemple non limitatif et elle peut également comporter par exemple deux creux de réception ou deux lèvres de fixation.

Plus précisément, le camping-car comporte un habitacle 3 de conduite comportant des façades latérales 73 et 83 et une façade frontale 30. Préférentiellement, il comporte deux profilés 4, chaque profilé 4 s'étendant de chaque côté latéral de la façade frontale 30 de l'habitacle.

Plus précisément également, le camping-car comporte une cabine de loisir 2 placée à l'arrière de l'habitacle de conduite 3, la cabine de loisir 2 comportant des façades latérales 72 et 82, un toit 22 et une façade arrière 21.

Très préférentiellement, un seul et même panneau 24 ou 25 regroupe une façade latérale 73 ou 83 de l'habitacle 3 d'une part et une façade 72 ou 82 correspondante de la cabine 2 d'autre part pour matérialiser une façade latérale 7 ou 8 du camping-car. Le camping-car est ainsi du type « intégral ». La façade frontale 30 vient alors se fixer, au niveau de l'habitacle 3, sur les profilés situés sur chaque panneau 24 ou 25.

Préférentiellement, les panneaux 24 et 25 sont des panneaux du type sandwich. D'autres panneaux peuvent évidemment être utilisés, comme par exemple des panneaux en bois, en métal ou en plastique.

Les panneaux 24 et/ou 25 comportent, au niveau de l'habitacle 3 une portière 35 comportant elle-même une vitre 34. Ils peuvent comporter aussi au moins une portière 242 au niveau de la cabine 2.

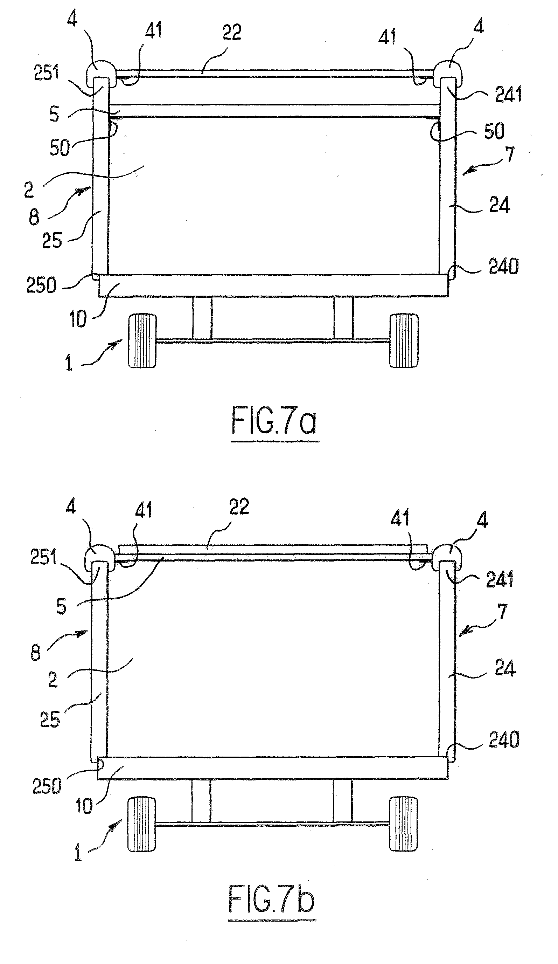

Les figures 7a et 7b montrent que le camping-car comporte un plancher 10, chaque panneau 24 ou 25 étant fixé au plancher 10. Le plancher est préférentiellement en bois, mais peut comporter d'autres matériaux.

Les figures 4 et 5 notamment montrent que préférentiellement, chaque profilé 4 se prolonge longitudinalement à partir de l'habitacle 3 le long de chaque façade latérale 72 et 82 de la cabine 2 et sert de fixation du toit 22 de la cabine 2.

Préférentiellement encore, chaque profilé 4 se prolonge longitudinalement le long de chaque façade latérale 72 et 82 de la cabine 2 jusqu'au plancher 10 et sert de fixation de la façade arrière 21 de la cabine 2.

De même, préférentiellement chaque profilé de l'habitacle 3 s'étend de chaque côté latéral de la façade frontale 30 de l'habitacle jusqu'au plancher 10.

Les développements qui suivent décrivent une possibilité préférée de montage d'un camping car selon l'invention.

Le plancher 10 est tout d'abord fixé sur le châssis 1, par exemple par boulonnage.

Chaque profilé 4 est ensuite fixé sur un panneau 24 ou 25. De la colle par exemple est placée à l'interface entre une partie supérieure 241 ou 251 du panneau 24 ou 25 et le creux 40 du profilé 4. Un vissage peut renforcer le collage.

Préférentiellement, chaque profilé 4 est constitué de plusieurs tronçons, pour des raisons de facilité de fabrication. Une paire de premiers tronçons cintrés forme les pièces d'angle de l'habitacle 3. Une paire de deuxièmes tronçons sensiblement rectilignes forme les pièces d'angle de la cabine 2 entre le toit 22 et les façades latérales 72 et 82. Une paire de troisièmes tronçons sensiblement rectilignes forme les pièces d'angle de la cabine 2 entre la façade arrière 21 et les façades latérales 72 et 82. Chaque tronçon est relié à un autre tronçon précédent ou suivant par un système de coopération du type mâle/femelle par exemple.

Chaque panneau 24 ou 25 est fixé au plancher 10. A cet effet, chaque panneau 24 ou 25 comporte préférentiellement, le long d'une partie inférieure, par exemple une feuillure 240 ou 250 apte à coopérer avec un côté latéral du plancher 10. De la colle est appliquée entre la feuillure 240 ou 250 et le plancher 10 et un système de vissage renforce la fixation. D'autres moyens de fixation sont bien entendu envisageables.

Comme le montrent plus précisément les figures 7a et 7b, le camping-car comporte des traverses 5 de renfort et de maintien d'écartement entre les façades latérales 7 et 8 du camping-car. Les traverses sont par exemple en bois, mais peuvent comporter d'autres matériaux.

Selon un premier mode de réalisation représenté à la figure 7a, les traverses 5 sont fixées directement sur les façades latérales 7 et 8 du camping-car et s'étendent selon une direction perpendiculaire à un plan longitudinal vertical du camping-car. Les traverses 5 sont fixées à chaque panneau 24 ou 25 par un système 50 de vissage par exemple.

La façade frontale 30, le toit 22 et la façade arrière 21 sont ensuite fixés sur les profilés 4.

La façade frontale 30 comporte ainsi par exemple un bouclier 33, un capot moteur 32, un pare-brise 31 et une plaque 36, située au-dessus du pare-brise 31. La plaque 36 sert de liaison entre la façade frontale 30 et le toit 22 du camping-car.

Le toit 22 comporte une succession de plaques 220, 221, 222.

La façade arrière 21 comporte un capot de coffre 210, un pare-brise arrière 211 et une plaque 212, située au-dessus du pare-brise 211. La plaque 212 sert de liaison entre la façade frontale arrière 21 et le toit 22 du camping-car.

Chaque élément de la façade frontale 30, du toit 22 ou de la façade arrière 21 est fixé aux profilés 4 par collage sur la lèvre 41 par exemple.

Chaque élément peut comporter un cadre entourant une partie mobile, de sorte que le cadre peut être fixé sur le profilé 4 et la partie mobile peut être mobile par rapport au camping-car. C'est le cas du capot moteur 32, de la plaque 222 et du capot de coffre 210 par exemple, comme le montrent les figures 3a et 3b.

Chaque élément de la façade frontale 30, du toit 22 ou de la façade arrière 21 peut être opaque ou transparent. Les éléments opaques sont par exemple le capot moteur 32, la plaque supérieure 36, les plaques 220, 222, et 212 et le capot de coffre 210. Les éléments transparents sont par exemple le pare-brise 31, les plaques 223 et 221 et le pare-brise 211.

Selon un deuxième mode de réalisation représenté à la figure 7b, les traverses 5 font partie intégrante de la façade frontale 30, du toit 22 ou de la façade arrière 21. A ce titre, elles sont directement fixées sur les profilés 4. Elles sont alors directement collées sur les lèvres 41 par exemple. Elles jouent alors à la fois leur rôle classique de renfort et de maintien d'écartement des façades latérales 7 et 8, mais également un rôle de support, au moins en partie, de chaque élément de la façade frontale 30, du toit 22 ou de la façade arrière 21.

Les plaques 36, 223, 222, 221, 220 et 212, les pare-brises 31 et 211 et les capots 32 et 210 peuvent ainsi être fixés sur et supportés par les traverses 5, elles-mêmes fixées sur et supportées par les profilés 4. Selon une variante, tout ou partie des plaques 36, 223, 222, 221, 220 et 212, des pare-brises 31 et 211 et/ou des capots 32 et 210 peut aussi être fixé sur et supporté par les traverses 5 et les profilés 4.

## Revendications

1. Camping-car comportant une façade frontale (30), des façades latérales (7, 8), un toit (22) et une façade arrière (21), **caractérisé en ce qu'**il comporte au moins un profilé (4) fixé aux façades latérales (7, 8) et sur lequel viennent se fixer la façade frontale (30) et/ou le toit (22) et/ou la façade arrière (21).

2. Camping-car selon la revendication précédente, comportant d'une part un habitacle (3) de conduite comportant des façades latérales (73, 83) et une façade frontale (3 0), et d'autre part deux profilés (4), chaque profilé (4) s'étendant de chaque côté latéral de la façade frontale (30) de l'habitacle.

3. Camping-car selon la revendication précédente, comportant une cabine de loisir (2) placée à l'arrière de l'habitacle de conduite (3), la cabine de loisir (2) comportant des façades latérales (72, 82), un toit (22) et une façade arrière (21), un seul et même panneau (24, 25) formant une façade latérale (73, 83) de l'habitacle (3) et une façade (72, 82) correspondante de la cabine (2) pour matérialiser une façade latérale du camping-car.

4. Camping-car selon la revendication précédente, comportant un plancher (10), chaque panneau (24, 25) étant fixé au plancher (10).

5. Camping-car selon la revendication précédente lorsqu'elle dépend de la revendication 2, dans lequel chaque profilé de l'habitacle s'étend de chaque côté latéral de la façade frontale (30) de l'habitacle jusqu'au plancher (10).

6. Camping-car selon l'une des revendications 3-5 lorsqu'elle dépend de la revendication 2, dans lequel chaque profilé (4) se prolonge longitudinalement à partir de l'habitacle (3) le long de chaque façade latérale de la cabine (2) et sert de fixation du toit de la cabine (2).

7. Camping-car selon la revendication 6 lorsqu'elle dépend de la revendication 4, dans lequel chaque profilé (4) se prolonge longitudinalement le long de chaque façade latérale de la cabine (2) jusqu'au plancher (10) et sert de fixation de la façade arrière de la cabine (2).

8. Camping-car selon l'une des revendications précédentes, dans lequel chaque profilé (4) forme une pièce d'angle entre les façades latérales (7, 8) du camping-car et la façade frontale (30) et/ou le toit (22) et/ou la façade arrière (21) du camping car.

9. Camping-car selon l'une des revendications précédentes, dans lequel chaque profilé (4) comporte d'une part un creux (40) de réception d'au moins une façade (7, 8) et d'autre part au moins une lèvre (41) de fixation d'au moins une autre façade (30, 21, 22).

10. Camping-car selon l'une des revendications précédentes, comportant au moins une traverse (5) fixée aux façades latérales (7, 8) et/ou aux profilés (4) et s'étendant selon une direction perpendiculaire à un plan longitudinal vertical du camping-car.

11. Camping-car selon l'une des revendications précédentes, dans lequel la façade avant (30) comporte un bouclier (33), un capot moteur (32), un pare-brise (31) et/ou une plaque (36) supérieure située au-dessus du pare-brise (31), le bouclier (33), le capot moteur (32), le pare-brise (31) et/ou la plaque (36) supérieure étant directement fixés sur chaque profilé (4).
